# EUROPEAN PATENT SPECIFICATION

(11) **EP 2 318 190 B1**
(45) Date of publication and mention of the grant of the patent: **28.03.2012**
(21) Application number: 10719797.2
(22) Date of filing: 20.04.2010
(51) Int. Cl.: B29B 7/76, B29C 44/42

(54) **MIXING DISCHARGE DEVICE**
MISCHUNGSAUSSTOSSVORRICHTUNG
DISPOSITIF D'ÉVACUATION DE MÉLANGE

(30) Priority: 22.04.2009 JP 2009104569
(43) Date of publication of application: 11.05.2011
(73) Proprietor: Panasonic Corporation, Kadoma-shi Osaka 571-8501 (JP); Toho Machinery Co., Ltd., Tokushima 771-1153 (JP)
(72) Inventor: OZAKI, Hitoshi, Chuo-ku, Osaka-shi, Osaka 540-6207 (JP); SHIBAYAMA, Takuto, Chuo-ku, Osaka-shi, Osaka 540-6207 (JP); UEHARA, Katsuyoshi, Chuo-ku, Osaka-shi, Osaka 540-6207 (JP); NAGATA, Hitoshi, Chuo-ku, Osaka-shi, Osaka 540-6207 (JP); SUZUE, Sanjiro, Ohjin-cho, Tokushima-shi Tokushima 771-1153 (JP); MOTOKI, Akira, Ohjin-cho, Tokushima-shi Tokushima 771-1153 (JP)
(74) Representative: Schwabe - Sandmair - Marx
(86) International application number: PCT/JP2010/002841
(87) International publication number: WO 2010/122780

(56) References cited:
- EP-A2- 0 719 627

## Description

### Technical Field

The present invention relates to a mixing discharge device with a pressure control mechanism. The mixing discharge device mixes liquids, each of which contains a raw material and at least one of which further contains a blowing agent, together in a pressurized atmosphere and discharges the resultant mixture while reducing the pressure of the mixture, to form plastic foam.

### Background Art

Patent Literature 1 (JP 2009-51013 A) discloses a mixing head that uses carbon dioxide or a mixed gas of carbon dioxide and another low-boiling gas for a blowing agent and that is suitable for forming polyurethane foam. Patent Literature 2 (JP 3575815 B) discloses a multicomponent mixing head that employs collisional mixing by high pressure injection. The technique of Patent Literature 2 has tried to reduce eddy flow and unsteady-state flow that are generated during collisional mixing and thereby to solve a problem that is caused by the flows. Patent Literature 3 (JP 3332313 B) discloses a method of discharging a polyurethane reaction mixture, which has been mixed mechanically, through a thin and long flow path after the mixture is contained once in an extended distribution chamber, and a device for implementing the method.

Specifically, the mixing head of Patent Literature 1 includes: an outflow passage having a discharge port; a mixing chamber that has openings at the intersections with the passage and that has inlets formed inside thereof for liquids, each of which contains a raw material and a blowing agent; adjustment chamber provided to oppose to the mixing chamber with the outflow passage being interposed therebetween; a first piston that is inserted into the mixing chamber and can reciprocate from the opening of the mixing chamber, which is open to the outflow passage, to a position where the inlets inside the mixing chamber are open; and a second piston that is inserted into the adjustment chamber and movable into the mixing chamber, and has a smaller diameter than that of the first piston. In the mixing head, two types of the liquids are injected into the mixing chamber from the inlets and at the same time, the second piston is inserted into the mixing chamber. With the amount of insertion thereof being controlled, the pressure inside the mixing chamber is adjusted and the mixture is prevented from expanding rapidly while being discharged. In addition, an embodiment of the mixing head further is provided with a cleaning piston inside the outflow passage that extends straight and upstream from the discharge port and that communicates with the mixing chamber. The cleaning piston has a cleaning function that removes the liquids and the mixture remaining in the respective corresponding passages, together with the first piston and the second piston. This function allows the mixing head to carry out intermittent discharges, with a cleaning step using the respective pistons being interposed between respective discharges.

The mixing head of Patent Literature 2 includes: a nozzle body having a mixing chamber that injects individual liquid components under high pressure to allow the components to collide and be mixed together; discharge nozzles that are open to the mixing chamber and inject the individual liquid components; a discharge duct that discharges a mixed solution that has been mixed inside the mixing chamber; a cylinder device that slides inside the mixing chamber; and an adjustment member having a multiple piston mechanism that can protrude into the space inside the discharge duct. The discharge duct and the nozzle body communicate directly with each other. The discharge duct and the mixing chamber communicate with each other at a predetermined angle. This configuration allows high pressure injection of the liquid components and mixing by the injection. The multiple piston mechanism has the above-mentioned cleaning function. This function allows the mixing head to carry out intermittent discharges.

The device of Patent Literature 3 includes: a distribution chamber into which a polyurethane reaction mixture that has been mixed mechanically is supplied under high pressure; a thin and long flow path that communicates with the distribution chamber; and a piston that forms the flow path and has a taper surface. The end located on the downstream side of the flow path communicates with an open discharge port. In the device, the reciprocation of the piston varies the width of the flow path, so that the pressure of the mixture to be supplied to the distribution chamber and the degree to which the pressure of the mixture is reduced in the flow path are adjusted. An annular collision surface, to which the mixture that flows out from the flow path at high speed collides, is disposed at the center or on the inner peripheral surface of the discharge port. The collision surface disturbs the flow of the mixture to reduce the kinetic energy of the mixture. This configuration results in foaming of the polyurethane reaction mixture. However, this device has no cleaning function and is suitable only for continuous discharge.

In the mixing head of Patent Literature 1, the degree to which the pressure of the mixture is reduced is adjusted by controlling the amount of stroke of a second piston into the mixing chamber. However, the interval of the gap formed between the inner wall of the mixing chamber and the second piston is constant regardless of the amount of stroke of the second piston. Accordingly, when the amount of the mixture that flows out from the mixing chamber or the content of the blowing agent in the liquids is increased, no matter how much the amount of stroke of the second piston is increased, the mixture flows out to the outflow passage, with the pressure thereof not being reduced sufficiently. This results in discharge accompanied by a rapid expansion and generation of a turbulent flow. The state of such discharge is referred to as so-called "splash". Splash causes scattering of foam and uneven filling.

In the mixing head of Patent Literature 2, the multiple pistons carry out multistage adjustments of the flow path for the mixture in a communication portion where the mixing chamber and the discharge duct communicate with each other. The adjustment reduces the eddy flow and unsteady-state flow generated in the mixed solution that flows out from the mixing chamber to the discharge duct, into a laminar state. However, when the blowing agent is a low-boiling gas, the openings of the multiple pistons including the center cleaning piston are required to be extremely small. Such small piston openings result in rapid expansion of the mixed solution that has passed through the piston section to cause splash. Additionally, the multiple pistons are complicated in configuration and control thereof, which results in an increase in cost of the mixing head.

The device of Patent Literature 3 is excellent in that it is not affected by the eddy flow and unsteady-state flow generated by collisional mixing. However, this device cannot provide mechanical washing and therefore is not suitable for intermittent discharge.

### Citation List

### Patent Literature

{PTL 1} JP 2009-51013 A
{PTL 2} JP 3575815 B
{PTL 3} JP 3332313 B
EP 0 719 627 A2 relates to a process and device for producing foam using carbon dioxide dissolved under pressure. Producing foam from a liquid containing gas dissolved under pressure, by expanding the liquid to a pressure below the saturation pressure of the gas and releasing the gas. The process comprises forcing the liquid though an extended flow channel so that the pressure is reduced against the flow resistance and a high shear rate is generated, and then reducing the rate of flow to 1/10-1/500 of its original value before the liquid foams.
This document discloses an apparatus in accordance with the preamble of claim 1.

### {Summary of Invention}

It is a general object of the present invention to provide an improved and useful mixing discharge device in which the above-mentioned problems are eliminated.
In order to achieve the above-mentioned object, there is provided a mixing discharge device according to claim 1.
Advantageous embodiments are defined by the dependent claims.

Advantageously, a mixing discharge device is a device for forming plastic foam by mixing at least two types of liquids, each of which contains a raw material and at least one of which further contains a blowing agent, together in a pressurized atmosphere and discharging the resultant mixture while reducing the pressure of the mixture. The device includes: a mixing chamber where the at least two types of liquids supplied individually into the chamber are mixed together in the pressurized atmosphere; a tapered path that communicates with the mixing chamber downstream of the mixing chamber and has an inner peripheral surface where the cross-sectional area of the path decreases in a downstream direction of the tapered path; a tapered piston that is inserted into the tapered path and has an outer peripheral surface whose shape corresponds to that of the inner peripheral surface of the tapered path; an actuator for the tapered piston that retracts the tapered piston from a position where the inner peripheral surface and the outer peripheral surface are in direct contact with each other to form a gap between the inner peripheral surface and the outer peripheral surface, with the cross-sectional area of the gap decreasing in the downstream direction of the tapered path; a buffer path that communicates with the tapered path downstream of the tapered path; and a discharge port for ultimately discharging the mixture that has passed through the buffer path. The buffer path device receives the mixture delivered to the buffer path from the tapered path through the gap, with the mixture expanding, and delivers the mixture to the side of the discharge port through an aperture, so that the degree of expansion of the mixture is alleviated as compared to the case where the mixture is delivered directly from the tapered path to the discharge port. The actuator for the tapered piston controls the retraction amount of the tapered piston to vary the width of the gap and thereby adjusts the pressurized atmosphere that the mixing chamber maintains and the degree to which the pressure of the mixture is reduced in the tapered path.

Advantageously, in the mixing discharge device, the mixture containing a blowing agent and formed in the mixing chamber is delivered to the buffer path through the gap formed between the inner peripheral surface of the tapered path and the outer peripheral surface of the tapered piston. The gap has a shape whose cross-sectional area decreases in the downstream direction of the tapered path, i.e. in the direction to the buffer path from the mixing chamber, corresponding to the shapes of the inner peripheral surface and the outer peripheral surface. The pressure of the mixture that passes through the gap is reduced gradually according to the shape of the gap. The degree of reduction is adjusted easily through control of the retraction amount of the tapered piston. Additionally, the shape of the gap realizes an adjustment amount that allows the degree of reduction to be large. This makes it possible to reduce the pressure of the mixture gradually, with the blowing agent being dissolved, even in the case where the content of the blowing agent in the mixture is large or where the blowing agent is a low-boiling gas such as carbon dioxide. Adjustment of the pressure by the gap also involves adjustment of the pressurized atmosphere inside the mixing chamber. In the mixing discharge device, the mixture that has passed through the gap further is delivered to the buffer path that communicates with the tapered path downstream of the path. The buffer path has a configuration in which the buffer path receives the mixture that has passed through the gap, with the mixture expanding, and delivers the mixture to the side of the discharge port through an aperture. The configuration of the buffer path alleviates the degree of expansion of the mixture as compared to the case where the mixture is delivered directly from the tapered path to the discharge port. The mixture delivered from the buffer path to the side of the discharge port expands after being discharged from the discharge port and ultimately forms plastic foam. The buffer path achieves further gradual and preliminary expansion that is different from this ultimately expansion. The mixing discharge device fez discharges the mixture while preventing volatilization of the blowing agent as well as a rapid expansion and pressure decrease of the mixture by the gap and the buffer path. In the mixing chamber, even when liquids containing a raw material and a blowing agent are subjected to collisional mixing, the turbulent flow and unsteady-state flow generated thereby are reduced effectively. This prevents the turbulent flow and splash phenomenon from being generated during discharge without lowering the foaming rate of the plastic foam.

As can be understood from the description above, the effects of the mixing discharge device of the present invention are especially noticeable when the blowing agent is a low-boiling gas such as carbon dioxide.

### {Brief Description of Drawings}

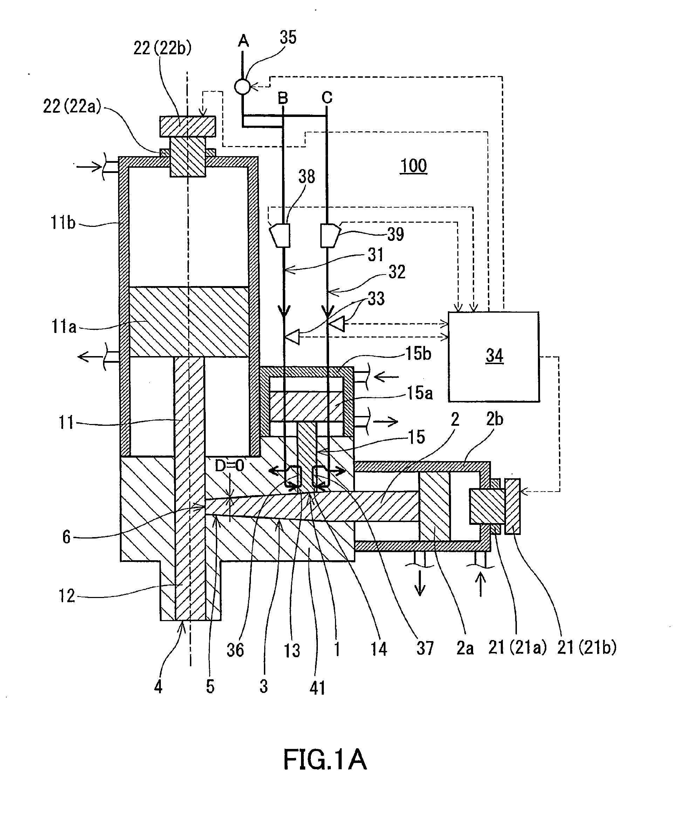

{Fig. 1A}
   Fig. 1A is a cross-sectional view that schematically shows a stopped state in an embodiment of the mixing discharge device of the present invention.
{Fig. 1B}
   Fig. 1B is a cross-sectional view that schematically shows an operating state in the embodiment of the mixing discharge device of the present invention.
{Fig. 2A}
   Fig. 2A is a cross-sectional view that schematically shows a stopped state in another embodiment of the mixing discharge device of the present invention.
{Fig. 2B}
   Fig. 2B is a cross-sectional view that schematically shows an operating state in the another embodiment of the mixing discharge device of the present invention.
{Fig. 3A}
   Fig. 3A is a cross-sectional view that schematically shows a stopped state in still another embodiment of the mixing discharge device of the present invention.
{Fig. 3B}
   Fig. 3B is a cross-sectional view that schematically shows an operating state in the still another embodiment of the mixing discharge device of the present invention.

### {Description of Embodiments}

In an embodiment of the mixing discharge device of the present invention, the inner peripheral surface of the tapered path and the outer peripheral surface of the tapered piston are both conical surfaces.

In this configuration, a gap with a shape of a cone whose vertex side is the downstream side is formed between the inner peripheral surface and the outer peripheral surface. The shape may be formed of a part of a cone having no vertex. This gap reduces the pressure of the mixture further uniformly.

In an embodiment of the mixing discharge device of the present invention, the buffer path has a larger cross-sectional area of the flow path for the mixture than that of the gap, in the communication portion of the buffer path where the buffer path communicates with the gap, and the cross-sectional area of the flow path for the mixture in the end portion of the buffer path is smaller than that of the flow path in the communication portion, and therefore the end portion functions as the aforementioned aperture.

This configuration achieves the preliminary expansion in the buffer path under a further gradual condition. The cross-sectional area of the flow path in the communication portion that is larger than that of the gap, and the aperture located in the end portion contribute significantly to the gradual expansion. This configuration prevents volatilization of the blowing agent as well as a rapid expansion and pressure decrease of the mixture more reliably and effectively.

An embodiment of the mixing discharge device of the present invention further includes a sub-piston that varies the area of a delivery port for delivering the mixture to the side of the discharge port in the buffer path, and an actuator for the sub-piston that reciprocates the sub-piston.

In this configuration, the opening of the delivery port is adjusted by the sub-piston. The opening of the delivery port corresponds to the flow amount of the mixture at the delivery port, i.e. the size of the aperture in the end portion of the buffer path. Accordingly, the sub-piston adjusts further precisely the degree of the preliminary expansion in the buffer path.

The delivery port typically has a smaller area than the cross-sectional area of the flow path in the communication portion of the buffer path and therefore functions as the aperture.

The embodiment further may include a sub-buffer path, through which the mixture delivered from the buffer path passes, between the buffer path and the discharge port. In this embodiment, the delivery port of the buffer path is open at an inner peripheral surface of the sub-buffer path. The sub-buffer path has a constant cross-section in a portion extending downstream from the delivery port and extends straight in the portion. The cross-sectional area of the flow path for the mixture in the portion extending downstream from the delivery port of the sub-buffer path is larger than the area of the delivery port. The sub-piston is inserted in the sub-buffer path. An actuator for the sub-piston allows the sub-piston to reciprocate inside the sub-buffer path to vary the area of the delivery port that is open at the inner peripheral surface of the sub-buffer path.

In the sub-buffer path, the mixture delivered from the delivery port expands. This expansion occurs more gradually as compared to the case where the mixture that has passed through the delivery port is discharged directly from the discharge port. That is, the sub-buffer path delays the reduction of the pressure of the mixture, which is delivered from the buffer path, to the atmospheric pressure and the expansion of the mixture, so that the mixture is prevented from rapidly expanding after passing through the discharge port. The rapid expansion results in generation of high discharge power and splash. Accordingly, the sub-buffer path makes the effects of the present invention more reliable.

The embodiment may have a configuration in which an opening located at the end of the sub-buffer path is the discharge port and the sub-piston can reciprocate from a position where the delivery port is exposed completely to the sub-buffer path to the discharge port and beyond.

In this configuration, the sub-piston can have a function of cleaning a region extending from the delivery port to the discharge port. In this case, the mixing discharge device of the present invention is suitable for intermittent discharge of plastic foam.

Depending on the configuration of the tapered piston and that of the open-close piston inside the mixing chamber to be described later, these pistons and sub-piston can have a function of cleaning a region extending from the mixing chamber to the discharge port. In this case, the mixing discharge device of the present invention is particularly suitable for intermittent discharge of plastic foam.

In the embodiment of the mixing discharge device of the present invention having the sub-piston, the tapered piston and sub-piston may have positioning mechanisms for setting the positions to which these pistons are retracted.

In this configuration, the positioning mechanisms adjust the width of the gap and the opening of the delivery port. The width and the opening adjusted by the positioning mechanisms tend not to be varied by the pressure of the mixture discharged from the mixing chamber and a load that is imposed during discharge. Therefore, this configuration ensures discharge of plastic foam set by an operator.

In the embodiment of the mixing discharge device of the present invention having the sub-piston, the actuator for the tapered piston and the actuator for the sub-piston may allow the tapered piston and the sub-piston to reciprocate, respectively, based on a pressure under which at least one of the liquids is supplied to the mixing chamber, and thereby to vary the cross-sectional area of the gap and the area (opening) of the delivery port.

This configuration adjusts the followings further suitably: the pressurized atmosphere (mixture pressure) in the mixing chamber, the degree to which the pressure of the mixture is reduced in the gap, and the degree of expansion of the mixture in the buffer path (in the embodiment with the sub-buffer path, additionally, the degree of expansion in the sub-buffer path). This configuration cancels variations in pressure under which the liquids are supplied to achieve discharge of plastic foam under an appropriate condition.

Reciprocation of these pistons and variations in the cross-sectional area and the area based on the pressure under which the liquids are supplied are typically carried out automatically. The automatic reciprocation and variations are achieved by, for example, the pressure sensors and controller to be described later.

An embodiment of the mixing discharge device of the present invention further includes a blowing agent supply mechanism that supplies a required amount of the blowing agent to a liquid containing the raw material, to form the liquid containing the raw material and the blowing agent.

This configuration makes it easy to change the amount of the blowing agent to be supplied during discharge of plastic foam to a required amount and thereby facilitates adjustment of the amount of the blowing agent in the resultant plastic foam.

In the embodiment of the mixing discharge device of the present invention having the sub-buffer path, a body part including the mixing chamber, the tapered path, the buffer path, and the sub-buffer path may have a configuration that can be divided into a block A including the mixing chamber, the tapered path, and the buffer path and a block B including the sub-buffer path.

This configuration can be achieved by a combination of blocks with simple processed forms and thereby contributes to a reduction in cost of the mixing discharge device of the present invention. This configuration facilitates maintenance of the device and thereby supports the device to maintain an normal operation.

The block A is, for example, an L-shaped block. The block B is, for example, a straight (I-shaped) block. The blocks A and B each may have a configuration that can be divided into smaller blocks.

In an embodiment of the mixing discharge device of the present invention, the blowing agent is a liquid, subcritical, or supercritical carbon dioxide or a mixture of the carbon dioxide and another low-boiling gas.

These characteristics and others of the mixing discharge device of the present invention are made clear by the specific embodiments described below. These characteristics can be employed independently or in combination of various characteristics combined as much as possible.

Hereinafter, specific embodiments of the mixing discharge device of the present invention are described with reference to the drawings. The embodiments described below are examples of the device of the present invention and do not limit the ranges of claims.

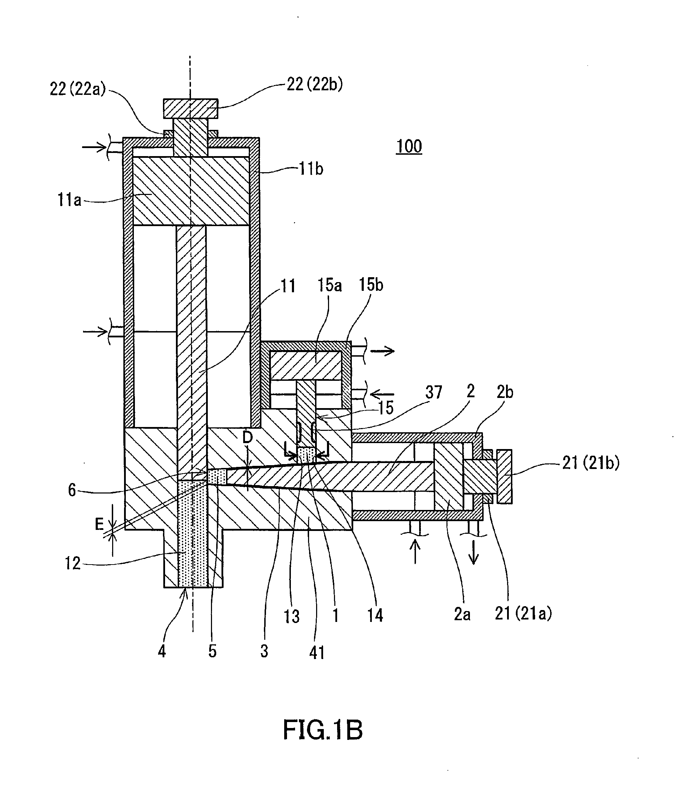

Figs. 1A and 1B show an embodiment of the mixing discharge device of the present invention. Fig. 1A shows a stopped state of the embodiment. Fig. 1B shows an operating state of the embodiment. The mixing discharge device 100 shown in Figs. 1A and 1B includes a mixing chamber 1, a tapered piston 2, a tapered path 3, an actuator for the tapered piston 2, a buffer path 5, and a discharge port 4.

At least two types of liquids B and C, each of which contains a raw material for plastic foam and at least one of which further contains a blowing agent A mixed therein, are supplied individually to the mixing chamber 1 through supply systems 31 and 32 under pressure. The liquids B and C thus supplied are mixed together in a pressurized atmosphere in the chamber 1.

The device 100 includes an open-close piston 15 that can be inserted into the mixing chamber 1. As shown in Fig. 1A, when the device 100 is in the stopped state, the open-close piston 15 closes the mixing chamber 1. This closure hinders the liquids B and C from being supplied to the mixing chamber 1 through the supply systems 31 and 32. In this state, the liquids B and C can be led outside the device 100 through circulation paths 36 and 37 formed in the open-close piston. The liquids B and C led outside the device 100 can be recirculated through the supply systems 31 and 32. Such a relationship between the open-close piston 15 and the mixing chamber 1 allows the mixing chamber 1 to be cleaned by the open-close piston 15. This makes the device 100 suitable for intermittent discharge.

On the other hand, as shown in Fig. 1B, when the device 100 is in operation, the open-close piston 15 is retracted by its actuator (not shown in the drawings except for a part of an oil hydraulic or pneumatic line; the same applies to the actuators for the other pistons) to a position where the inlets 13 and 14 for the liquids B and C that are open at the inner peripheral surface of the mixing chamber 1 are exposed. In the space formed between the leading end of the open-close piston 15 and the tapered path 3 due to the retraction, the liquids B and C are mixed together. The numeral " 15a" in Figs. 1A and 1B indicates a piston head of the open-close piston 15.

The tapered path 3 communicates with the mixing chamber 1 downstream of the chamber 1. The path 3 has an inner peripheral surface where the cross-sectional area of the path 3 decreases in the downstream direction of the path 3. The tapered piston 2 has an outer peripheral surface whose shape corresponds to that of the inner peripheral surface of the path 3 and is inserted in the path 3.

As shown in Fig. 1A, when the device 100 is in the stopped state, the tapered piston 2 is in direct contact with the tapered path 3 and no gap exists between the inner peripheral surface of the path 3 and the outer peripheral surface of the piston 2. In addition to this, the tapered piston 2 is in direct contact with the inner peripheral surface of the buffer path 5 and closes the buffer path 5 including the delivery port 6 provided in the end portion thereof. Such a relationship among the piston 2, the path 3, and the path 5 allows the piston 2 to clean the paths 3 and 5. This makes the device 100 suitable for intermittent discharge.

On the other hand, as shown in Fig. 1B, when the device 100 is in operation, the tapered piston 2 is retracted by its actuator from the position where the piston 2 is in direct contact with the path 3. Retraction of the piston 2 forms a gap with a width D between the inner peripheral surface of the path 3 and the outer peripheral surface of the piston 2. Corresponding to the taper surfaces of the path 3 and the piston 2, the cross-sectional area of the gap decreases in the downstream direction (in the direction of the buffer path 5) of the path 3. The length of the gap where the mixture formed in the mixing chamber 1 flows is longer than the diameter of a portion of the tapered path 3 where the gap is formed. The retraction of the piston 2 forms the buffer path 5 between the leading end of the piston 2 and the delivery port 6.

The buffer path 5 has a cross-sectional area of the flow path for the mixture that is larger than the cross-sectional area of the gap in a communication portion where the gap and the path 5 communicates with each other. The cross-sectional area of the flow path for the mixture in the end portion of the buffer path 5 (the area of the delivery port 6 in the embodiment shown in Figs. 1A and 1B) is smaller than the cross-sectional area of the flow path in the communication portion in the buffer path 5. The delivery port 6 functions as an aperture for the mixture that flows through the buffer path 5. That is, the buffer path 5 has a configuration in which it receives the mixture delivered to the path 5 from the path 3 through the gap, with the mixture expanding, and the mixture is delivered to the side of the discharge port 4 through the aperture. The configuration alleviates the degree of expansion of the mixture as compared to the case where the mixture is delivered directly from the path 3 to the discharge port 4.

The device 100 includes a sub-piston 11 that varies the area of the delivery port 6 for delivering the mixture to the side of the discharge port 4 from the buffer path 5 and a sub-buffer path 12 to which the sub-piston 11 is inserted and inside of which the piston 11 slides.

The sub-buffer path 12 is disposed between the buffer path 5 and the discharge port 4. In the device 100, the opening located at the end of the sub-buffer path 12 (most downstream) is the discharge port 4. The delivery port 6 of the buffer path 5 is open at the inner peripheral surface of the sub-buffer path 12. When the device 100 is in operation, the mixture delivered from the buffer path 5 through the delivery port (aperture) 6 passes through the sub-buffer path 12 to reach the discharge port 4. The sub-buffer path 12 has a constant cross-section in a portion extending downstream from the delivery port 6. In the portion, the sub-buffer path 12 extends straight. The cross-sectional area of the flow path for the mixture in the portion extending downstream from the delivery port 6 of the sub-buffer path 12 is larger than the area of the delivery port 6. The actuator for the sub-piston 11 allows the sub-piston 11 to reciprocate inside the sub-buffer path 12 to vary the area of the delivery port 6 that is open at the inner peripheral surface of the sub-buffer path 12. The sub-piston 11 is reciprocated by its actuator from the position where the delivery port 6 is exposed completely to the sub-buffer path 12 to the discharge port 4 and beyond.

As shown in Fig. 1A, when the device 100 is in the stopped state, the sub-piston 11 closes the sub-buffer path 12 and shuts the delivery port 6. Such a relationship among the delivery port 6, the sub-piston 11, and the sub-buffer path 12 allows the pistons 11 to clean the path 12. This makes the device 100 suitable for intermittent discharge.

On the other hand, as shown in Fig. 1B, when the device 100 is in operation, the sub-piston 11 is retracted by its actuator so that at least a part of the delivery port 6 is exposed to the sub-buffer path 12. This retraction of the piston 11 leads the mixture to the sub-buffer path 12 through the delivery port 6.

Hereinafter, an embodiment of control of the mixing discharge device 100 shown in Figs. 1A and 1B is described.

When the discharge is stopped, the device 100 is in the state shown in Fig. 1A. When an operator starts operating the device 100, as shown in Fig. 1B, the open-close piston 15 retracts to the position where the inlets 13 and 14 for the liquids B and C are exposed. The actuator connected to a controller 34 retracts the piston 15. The retraction forms a space between the leading end of the piston 15 and the tapered path 3. With this, the controller 34 supplies the liquids B and C individually to the space through the supply systems 31 and 32 and the inlets 13 and 14 under pressure. Generally, the pressure applied during supply is provided through mixing of the blowing agent A into the liquids. However, a pressurizing mechanism can be added to the device 100 if necessary. Pressure sensors 33 and temperature sensors 38 and 39 connected to the controlled 34 are disposed in the supply systems 31 and 32 for the liquids. The liquids B and C that have been supplied are mixed together inside the space (inside the mixing chamber 1) in a pressurized atmosphere to form a mixture. The mixture contains the blowing agent A but the pressurized atmosphere allows the blowing agent A to be dissolved in the mixture.

In the embodiment shown in Figs. 1A and 1B, the inlets 13 and 14 of the mixing chamber 1 are opened and closed by the open-close piston 15. This configuration provides good responses of injection and cutoff of the liquids B and C into the mixing chamber 1.

With the formation of the mixture, the tapered piston 2 is retracted from the position where the piston 2 is in direct contact with the tapered path 3 and the sub-piston 11 is retracted from the position where the leading end of the piston 11 has reached the discharge port 4 to the position where at least a part of the delivery port 6 of the buffer path 5 is exposed to the sub-buffer path 12. Retractions of these pistons 2 and 11 form a flow path for the mixture that extends from the mixing chamber 1 to the discharge poi1 4 and that has a specific shape. The specific shape is as described above. The nonconventional shape of the flow path gradually reduces the pressure of the mixture formed in the mixing chamber 1 and thereby the effects of the present invention described above are provided reliably.

Persons skilled in the art can carry out other controls different from the embodiment of control described above using the device 100.

The device 100 is provided with positioning mechanisms 21 and 22 for setting the positions to which the pistons 2 and 11 are retracted. The positioning mechanisms 21 and 22 prevent the positions to which the pistons 2 and 11 are retracted, i.e. the width D of the gap and the opening E of the delivery port 6 that are obtained by retraction of the pistons 2 and 11, from varying due to the pressure of the mixture discharged from the mixing chamber 1 and the load imposed during discharge of the mixture. The positioning mechanisms 21 and 22 ensure discharge of plastic foam according to setting by the operator. The positioning mechanisms of the device 100 are provided with locknuts 21a and 22a and screws with seals 21 band 22b. The positioning mechanisms can be provided with double nuts instead of the locknuts. The screws with seals 21b and 22b go through the cylinders 2b and 11b to be brought into contact with the piston heads 2a and 11a and thereby determine the positions to which the pistons 2 and 11 are retracted. Persons skilled in the art can suitably employ positioning mechanisms other than those shown in Figs. 1A and 1B.

When intermittent discharge is carried out, discharge time may be different each time. In this case, a difference in the amounts of the liquids B and C to be consumed each time occurs. The difference causes variations in the pressure of the mixture formed in the mixing chamber 1, and the variations move the pistons 2 and 11 to vary the condition for discharging the mixture. While plastic foam is discharged, unintended variations in the condition are not desirable. The positioning mechanisms 21 and 22 prevent these variations.

When using a blowing agent containing a low-boiling gas such as carbon dioxide, it is difficult to maintain constant pressures under which the liquids B and C are supplied to the mixing chamber 1. The device 100 includes pressure sensors 33 provided for the supply systems 31 and 32 for the liquids B and C. In the device 100, the controller 34 feeds back the pressure of at least one of the liquids monitored by the sensors to control the amounts of retraction of the pistons 2 and 11. Persons skilled in the art can construct a control system that carries out the control automatically. This configuration adjusts the width D of the gap and the opening E of the delivery port to cancel the variations in the pressures under which the liquids B and C are supplied and thereby achieves maintenance of an appropriate discharge condition.

The device 100 includes a blowing agent supply mechanism that adjusts the amount of the blowing agent A to be supplied to the liquids B and/or C to a required amount. The mechanism is provided with a valve 35 connected to the controller 34. The mechanism adjusts the amount of the blowing agent A to be supplied to the liquids B and/or C and thereby allows control of the foamed state of plastic foam and adjustment of the amount of the blowing agent contained in the resultant foam. The valve 35 may be operated electrically or may be operated manually. Persons skilled in the art can construct a blowing agent supply mechanism suitably.

Although no divided state is shown in the drawings, a body block 41 of the device 100 including the mixing chamber 1, the tapered path 3, the buffer path 5, and the sub-buffer path 12 is a complex of the L-shaped block including the mixing chamber 1, the tapered path 3, and the buffer path 5 and the straight (I-shaped) block including the sub-buffer path 12. The respective blocks can be separated from each other. This configuration can be obtained with a combination of blocks with simple forms and therefore can be produced at low cost. In addition to this configuration, persons skilled in the art can design and produce the device 100 as a complex of blocks with arbitrary shapes.

More specifically, the mixing chamber 1, the tapered path 3, the buffer path 5 , the delivery port 6, and the sub-buffer path 12 are formed through processing of the body block 41. The tapered piston 2, the sub-piston 11, and the open-close piston 15 are fixed detachably to the body block 41 together with the cylinders 2b, 11b, and 15b that accommodate the pistons. This configuration facilitates maintenance of the device 100.

The device 100 includes the temperature sensors 38 and 39 for measuring the temperatures of the liquids B and C that are provided for the supply systems 31 and 32 for the liquids. The temperature sensors 38 and 39 are connected to the controller 34. This configuration allows the temperatures of the liquids B and C to be controlled through a heat exchanger that is not shown in the drawings, when the liquids B and C are circulated through the circulation paths 36 and 37 formed in the open-close piston 15 in the state where the device 100 is stopped (Fig. 1A).

When the blowing agent A contains a low-boiling gas, the effects of the present invention become more notable. Examples of the low-boiling gas include a liquid carbon dioxide, subcritical carbon dioxide, supercritical carbon dioxide, chlorofluorocarbon such as HFC-134a, nitrogen gas, and argon gas. The blowing agent A may contain two or more of the low-boiling gases.

Hereinafter, examples are described. As shown in Fig. 1A, in the state where the open-close piston 15 was closed and the inlets 13 and 14 were shut, the liquid B (polyol containing a carbon dioxide gas) and the liquid C (isocyanate) were circulated inside the supply systems 31 and 32 through the circulation paths 36 and 37. The liquids B and C were circulated until the pressures and temperatures of the liquids monitored by the pressure sensors 33 and temperature sensors 38 and 39 reached set values. After the pressures and temperatures became stable at the set values, the open-close piston 15 was retracted to isolate the circulation paths 36 and 37 from the supply systems 31 and 32 and thereby the inlets 13 and 14 were exposed inside the mixing chamber 1. Then, the liquids B and C were injected into the chamber 1 to be mixed together. With this, the tapered piston 2 and the sub-piston 11 were retracted to form the flow path for the mixture described above and plastic foam was then discharged from the discharge port 4. In the experiments carried out by the present inventors, foam was obtained that contained a residual carbon dioxide gas at a volume ratio of about 10%. The amounts of the liquids B and C to be consumed are reduced by the amount of the remaining carbon dioxide gas. In this example, the pressures of the liquids B and C were controlled by the temperatures of the liquids. However, persons skilled in the art can control the pressures using other methods.

The exposure of the inlets 13 and 14 that is achieved by retraction of the open-close piston 15 and the formation of the flow path for the mixture that is achieved by retraction of the tapered piston 2 and sub-piston 11 may not necessarily occur simultaneously. The operator can set the timing and the amount of reciprocation of each piston.

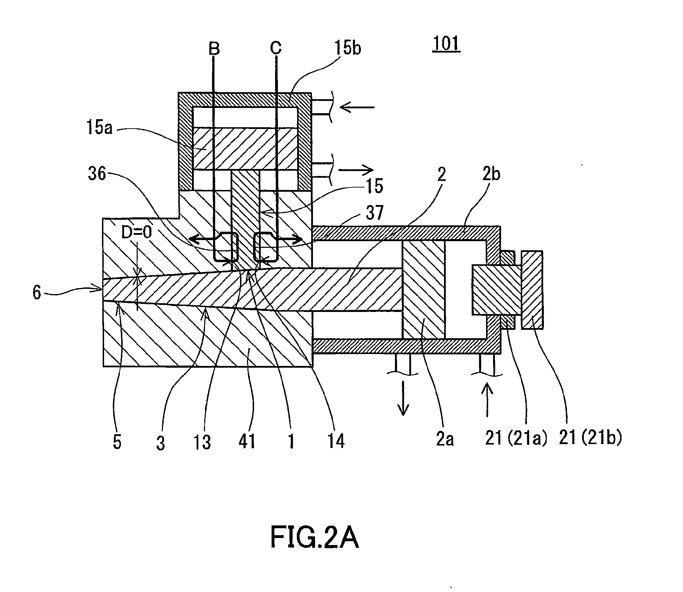

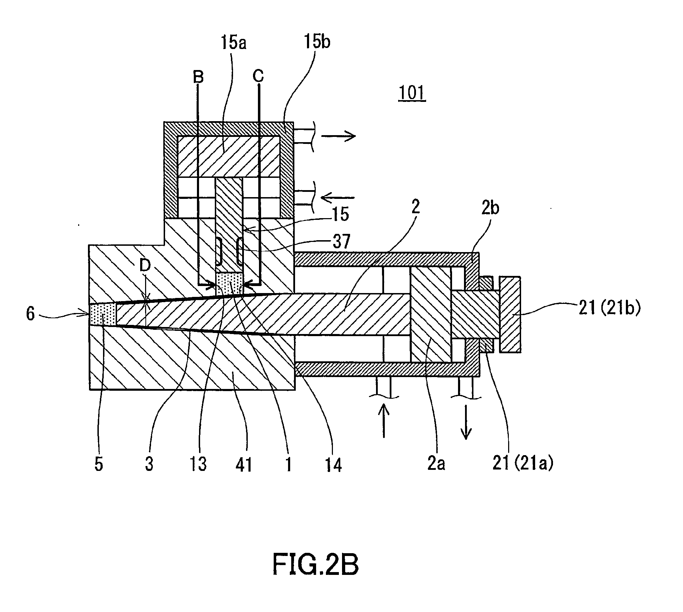

The effects of the present invention are achieved by the device including at least the mixing chamber 1, the tapered piston 2, the tapered path 3, and the buffer path 5. An embodiment of the device is shown in Figs. 2A and 2B. Fig. 2A shows a stopped state of the embodiment. Fig. 2B shows an operating state of the embodiment. As shown in Fig. 2B, when the device 101 is in operation, the aforementioned flow path for the mixture is formed. '

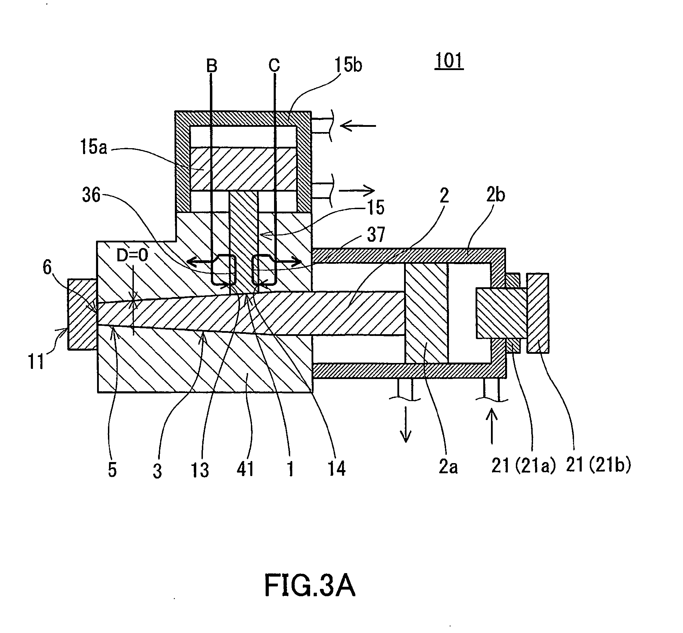

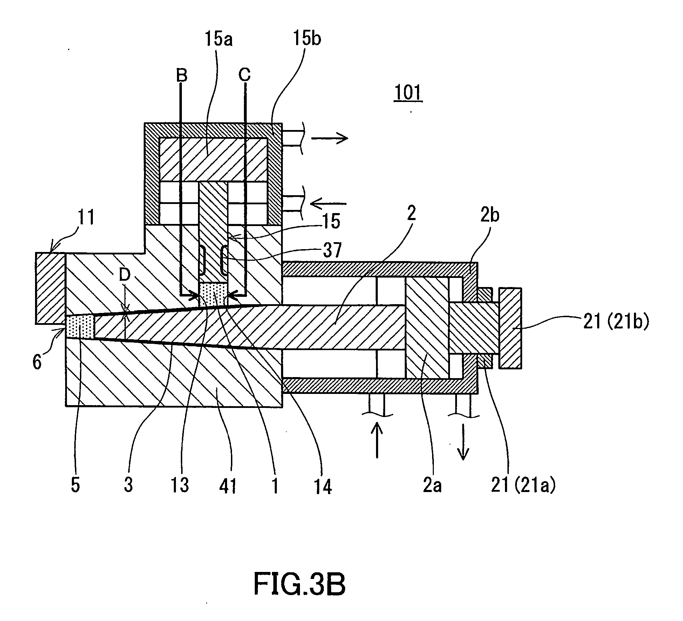

As shown in Figs. 3A and 3B, the device 101 may include the sub-piston 11 that varies the area of the delivery port 6 and its actuator. Fig. 3A shows a stopped state of the embodiment. Fig. 3B shows an operating state of the embodiment.

### Industrial Applicability

The mixing discharge device of the present invention is suitable for producing plastic foam, particularly plastic foam using a blowing agent containing a low-boiling gas.

## Claims

1. A mixing discharge device for forming plastic foam by mixing at least two types of liquids, each of which contains a raw material and at least one of which further contains a blowing agent, together in a pressurized atmosphere and discharging a mixture of the at least two types of liquids while reducing the pressure of the mixture,
wherein the device comprises:
a mixing chamber (1) where the at least two types of liquids supplied individually into the mixing chamber (1) are mixed together in the pressurized atmosphere,
a tapered path (3) that communicates with the mixing chamber (1) downstream of the mixing chamber (1) and has an inner peripheral surface where a cross-sectional area of the tapered path (3) decreases in a downstream direction of the tapered path (3),
a tapered piston (2) that is inserted into the tapered path (3) and has an outer peripheral surface whose shape corresponds to that of the inner peripheral surface of the tapered path (3),
an actuator for the tapered piston (2) that retracts the tapered piston (2) from a position where the inner peripheral surface and the outer peripheral surface are in direct contact with each other to form a gap between the inner peripheral surface and the outer peripheral surface, with a cross- sectional area of the gap decreasing in the downstream direction of the tapered path (3),
a discharge port (4) for ultimately discharging the mixture wherein
the actuator for the tapered piston (2) controls a retraction amount of the tapered piston (2) to vary the width of the gap and thereby adjusts the pressurized atmosphere that the mixing chamber (1) maintains and the degree to which the pressure of the mixture is reduced in the tapered path (3), **characterized in that** the device further comprises
a buffer path (5) that communicates with the tapered path (3) downstream of the tapered path (3), and the buffer path (5) has a configuration in which the buffer path (5) receives the mixture delivered to the buffer path (5) from the tapered path (3) through the gap, with the mixture expanding, and the mixture that has passed through the buffer path (5) is delivered to a side of the discharge port (4) through an aperture, so that the degree of expansion of the mixture is alleviated as compared to the case where the mixture is delivered directly from the tapered path (3) to the discharge port (4).

2. The mixing discharge device according to claim 1, wherein the inner peripheral surface and the outer peripheral surface are conical surfaces.

3. The mixing discharge device according to claim 1, wherein the buffer path (5) has a larger cross-sectional area of a flow path for the mixture than that of the gap, in a communication portion of the buffer path (5) where the gap and the buffer path (5) communicates with each other, and
the cross-sectional area of the flow path for the mixture in an end portion of the buffer path (5) is smaller than that of the flow path in the communication portion, and the end portion functions as the aperture.

4. The mixing discharge device according to claim 1, further comprising:
a sub-piston (11) that varies an area of a delivery port (6) of the buffer path (5) for delivering the mixture to the side of the discharge port (4), and
an actuator for the sub-piston (11) that reciprocates the sub-piston (11).

5. The mixing discharge device according to claim 4, further comprising:
a sub-buffer path (12), through which the mixture delivered from the buffer path (5) passes, between the buffer path (4) and the discharge port (4),
wherein the delivery port (6) of the buffer path (5) is open at an inner peripheral surface of the sub-buffer path (12),
the sub-buffer path has a constant cross-section in a portion extending downstream from the delivery port (6) and extends straight in the portion,
the cross-sectional area of the flow path for the mixture in the portion extending downstream from the delivery port (6) of the sub-buffer path (12) is larger than the area of the delivery port (6),
the sub-piston (11) is inserted in the sub-buffer path (12), and
an actuator for the sub-piston (11) allows the sub-piston (11) to reciprocate inside the sub-buffer path (12) to vary the area of the delivery port (6) that is open at the inner peripheral surface of the sub-buffer path (12).

6. The mixing discharge device according to claim 5, wherein an opening located at an end of the sub-buffer path (12) is the discharge port (4), and
the sub-piston (11) reciprocates from a position where the delivery port (6) is exposed completely to the sub-buffer path (12) to the discharge port (4) and beyond.

7. The mixing discharge device according to claim 4, further comprising positioning mechanisms for setting positions to which the tapered piston (2) and the sub-piston (11) are retracted.

8. The mixing discharge device according to claim 4, wherein the actuator for the tapered piston (2) and the actuator for the sub-piston (11) allow the tapered piston (2) and the sub-piston (11) to reciprocate, respectively, based on a pressure under which at least one of the liquids is supplied to the mixing chamber (1), and thereby to vary the cross-sectional area of the gap and the area of the delivery port (6).

9. The mixing discharge device according to claim 1, further comprising a blowing agent supply mechanism that supplies a required amount of the blowing agent to a liquid containing the raw material to form the liquid containing the raw material and the blowing agent.

10. The mixing discharge device according to claim 5, wherein a body part comprising the mixing chamber (1), the tapered path (3), the buffer path (5), and the sub-buffer path (12) has a configuration that is dividable into a block comprising the mixing chamber (1), the tapered path (3), and the buffer path (5) and a block comprising the sub-buffer path (12).

## Patentansprüche

1. Mischungsausbringungsvorrichtung zum Ausbilden von Kunststoffschaum bzw. Schaumkunststoff durch Mischen von wenigstens zwei Typen von Flüssigkeiten, wobei jede von denen ein Rohmaterial bzw. Ausgangsmaterial enthält und wenigstens eine von denen ferner ein Treibmittel enthält, und zwar zusammen in einer unter Druck gesetzten Atmosphäre bzw. Umgebung und Ausbringen einer Mischung bzw. eines Gemisches von den wenigstens zwei Typen von Flüssigkeiten, während der Druck der Mischung bzw. des Gemisches reduziert wird,
wobei die Vorrichtung aufweist:
eine Mischkammer (1), wo die wenigstens zwei Typen von Flüssigkeiten, die individuell in die Mischkammer (1) zugeführt werden, in der unter Druck gesetzten Atmosphäre bzw. Umgebung zusammengemischt werden,
einen verjüngten Pfad (3), der mit der Mischkammer (1) stromabwärts von der Mischkammer (1) in Verbindung ist und eine innere periphere bzw. umfängliche Oberfläche hat, wo eine Querschnittsfläche des verjüngten Pfades (3) in einer stromabwärts gerichteten Richtung des verjüngten Pfades (3) abnimmt,
einen verjüngten Kolben (2), der in den verjüngten Pfad (3) eingesetzt ist und eine äußere periphere bzw. umfängliche Oberfläche hat, deren Form zu der der inneren peripheren bzw. umfänglichen Oberfläche des verjüngten Pfades (3) entsprechend ist,
ein Betätigungsglied bzw. Stellantrieb für den verjüngten Kolben (2), der den verjüngten Kolben (2) aus einer Position einzieht bzw. zurückführt, wo die innere periphere bzw. umfängliche Oberfläche und die äußere periphere bzw. umfängliche Oberfläche in direktem Kontakt miteinander sind, um eine Lücke bzw. einen Zwischenraum zwischen der inneren peripheren bzw. umfänglichen Oberfläche und der äußeren peripheren bzw. umfänglichen Oberfläche zu bilden, und zwar mit einer Querschnittsfläche der Lücke bzw. des Zwischenraums, die in der stromabwärts gerichteten Richtung des verjüngten Pfades (3) abnimmt,
eine Ausbringungsöffnung bzw. ein Ausbringungsport (4) zum endlichen bzw. schließlichen Ausbringen der Mischung bzw. des Gemisches, wobei
das Betätigungsglied bzw. der Stellantrieb für den verjüngten Kolben (2) einen Einziehungs- bzw. Rückführungswert des verjüngten Kolbens (2) steuert, um die Breite bzw. Weite der Lücke bzw. des Zwischenraums zu variieren und dadurch die unter Druck gesetzte Atomsphäre bzw. Umgebung, die die Mischkammer (1) beibehält bzw. erhält und den Grad bzw. das Maß, auf welchen bzw. auf welches der Druck der Mischung bzw. des Gemisches reduziert wird, in dem verjüngten Pfad (3) einzustellen bzw. zu justieren, **dadurch gekennzeichnet, dass** die Vorrichtung ferner aufweist
einen Pufferpfad (5), der mit dem verjüngten Pfad (3) in Verbindung ist, und zwar stromabwärts von dem verjüngten Pfad (3), und wobei der Pufferpfad (5) eine Konfiguration hat, in welcher der Pufferpfad (5) die Mischung bzw. das Gemisch erhält bzw. empfängt, die bzw. das zu dem Pufferpfad (5) von dem verjüngten Pfad (3) durch die Lücke bzw. den Zwischenraum (5) geliefert wird, und zwar mit der Mischung bzw. dem Gemisch, die bzw. das sich ausdehnt, und wobei die Mischung bzw. das Gemisch, die bzw. das durch den Pufferpfad (5) gegangen ist, zu einer Seite der Ausbringungsöffnung bzw. des Ausbringungsports (4) durch eine Öffnung geliefert wird, so dass der Ausdehnungsgrad bzw. das Ausdehnungsmaß der Mischung bzw. des Gemisches vermindert wird, im Vergleich zu dem Fall, wo die Mischung bzw. das Gemisch direkt von dem verjüngten Pfad (3) zu der Ausbringungsöffnung bzw. dem Ausbringungsport (4) geliefert wird.

2. Mischungsausbringungsvorrichtung gemäß Anspruch 1, wobei die innere periphere bzw. umfängliche Oberfläche und die äußere periphere bzw. umfängliche Oberfläche konische Oberflächen sind.

3. Mischungsausbringungsvorrichtung gemäß Anspruch 1, wobei der Pufferpfad (5) eine größere Querschnittsfläche eines Strömungspfades für die Mischung bzw. das Gemisch hat als die der Lücke bzw. des Zwischenraumes, und zwar in einem Verbindungsabschnitt des Pufferpfades (5), wo die Lücke bzw. der Zwischenraum und der Pufferpfad (5) miteinander in Verbindung stehen, und
wobei die Querschnittsfläche des Strömungspfades für die Mischung bzw. das Gemisch in einem Endabschnitt des Pufferpfades (5) kleiner als die des Strömungspfades in dem Verbindungsabschnitt ist, und wobei der Endabschnitt als die Öffnung funktioniert.

4. Mischungsausbringungsvorrichtung gemäß Anspruch 1, ferner aufweisend:
einen Subkolben bzw. Unterkolben (11), der eine Fläche bzw. einen Bereich einer Lieferungsöffnung bzw. eines Lieferungsportes (6) des Pufferpfades (5) zum Liefern der Mischung bzw. des Gemisches zu der Seite der Ausbringungsöffnung bzw. des Ausbringungsportes (4) variiert, und
ein Betätigungsglied bzw. einen Stellantrieb für den Subkolben bzw. Unterkolben (11), der den Subkolben bzw. Unterkolben (11) hin- und herbewegt.

5. Mischungsausbringungsvorrichtung gemäß Anspruch 4, ferner aufweisend:
einen Sub- bzw. Unterpufferpfad (12), durch welchen die Mischung bzw. das Gemisch, die bzw. das von dem Pufferpfad (5) geliefert wird, hindurchgeht, und zwar zwischen dem Pufferpfad (5) und der Ausbringungsöffnung bzw. dem Ausbringungsport (4),
wobei die Lieferungsöffnung bzw. der Lieferungsport (6) von dem Pufferpfad (5) an einer inneren peripheren bzw. umfänglichen Oberfläche des Sub- bzw. Unterpufferpfades (12) offen ist,
wobei der Sub- bzw. Unterpufferpfad einen konstanten Querschnitt in einem Abschnitt hat, der sich stromabwärts gerichtet von der Lieferungsöffnung bzw. dem Lieferungsport (6) erstreckt und sich in dem Abschnitt gerade erstreckt,
wobei die Querschnittsfläche des Strömungspfades für die Mischung bzw. das Gemisch in dem Abschnitt, der sich stromabwärts gerichtet von der Lieferungsöffnung bzw. dem Lieferungsport (6) von dem Sub- bzw. Unterpufferpfad (12) erstreckt, größer als die Fläche bzw. der Bereich der Lieferungsöffnung bzw. des Lieferungsportes (6) ist,
wobei der Subkolben bzw. Unterkolben (11) in dem Sub- bzw. Unterpufferpfad (12) eingesetzt ist, und
wobei es ein Betätigungsglied bzw. Stellantrieb für den Subkolben bzw. Unterkolben (11) dem Subkolben bzw. Unterkolben (11) ermöglicht, sich innerhalb des Sub- bzw. Unterpufferpfades (12) hin- und herzubewegen, um die Fläche bzw. den Bereich der Lieferungsöffnung bzw. des Lieferungsportes (6) zu variieren, die bzw. der an der inneren peripheren bzw. umfänglichen Oberfläche des Sub- bzw. Unterpufferpfades (12) offen ist.

6. Mischungsausbringungsvorrichtung gemäß Anspruch 5, wobei eine Öffnung, die an einem Ende des Sub- bzw. Unterpufferpfades (12) gelegen ist, die Ausbringungsöffnung bzw. der Ausbringungsport (4) ist, und
wobei sich der Subkolben bzw. Unterkolben (11) von einer Position, wo die Lieferungsöffnung bzw. der Lieferungsport (6) vollständig dem Sub- bzw. Unterpufferpfad (12) ausgesetzt bzw. freiliegend ist, zu der Ausbringungsöffnung bzw. dem Ausbringungsport (4) hin- und herbewegt wird und weiter bzw. darüber hinaus.

7. Mischungsausbringungsvorrichtung gemäß Anspruch 4, die ferner Positioniermechanismen zum Einstellen von Positionen aufweist, zu welchen der verjüngte Kolben (2) und der Subkolben bzw. Unterkolben (11) eingezogen bzw. zurückgeführt werden.

8. Mischungsausbringungsvorrichtung gemäß Anspruch 4, wobei es das Betätigungsglied bzw. der Stellantrieb für den verjüngten Kolben (2) und das Betätigungsglied bzw. der Stellantrieb für den Subkolben bzw. Unterkolben (11) dem verjüngten Kolben (2) und dem Subkolben bzw. Unterkolben (11) ermöglichen, sich jeweils hin- und herzubewegen, basierend auf einem Druck, unter welchem wenigstens eine der Flüssigkeiten zu der Mischkammer (1) zugeführt wird, und um dadurch die Querschnittsfläche der Lücke bzw. des Zwischenraums und die Fläche bzw. den Bereich der Lieferungsöffnung bzw. des Lieferungsportes (6) zu variieren.

9. Mischungsausbringungsvorrichtung gemäß Anspruch 1, die ferner einen Treibmittelzuführungsmechanismus aufweist, der eine erforderliche Menge des Treibmittels zu einer Flüssigkeit zuführt, die das Rohmaterial bzw. Ausgangsmaterial enthält, um die Flüssigkeit zu bilden, die das Rohmaterial bzw. Ausgangsmaterial und das Treibmittel enthält.

10. Mischungsausbringungsvorrichtung gemäß Anspruch 5, wobei ein Körperteil, der die Mischkammer (1) den verjüngten Pfad (3), den Pufferpfad (5) und den Sub- bzw. Unterpufferpfad (12) aufweist, eine Konfiguration hat, die in einen Block, der die Mischkammer (1), den verjüngten Pfad (3) und den Pufferpfad (5) aufweist und einen Block teilbar ist, der den Sub- bzw. Unterpufferpfad (12) aufweist.

## Revendications

1. Dispositif mélangeur déverseur pour former une mousse plastique en mélangeant au moins deux types de liquides sous atmosphère pressurisée, chacun d'entre eux contenant une matière première et au moins l'un d'entre eux contenant en outre un agent gonflant, et en déversant un mélange des au moins deux types de liquides tout en réduisant la pression du mélange,
le dispositif comprenant :
une chambre de mélange (1) dans laquelle les au moins deux types de liquides apportés individuellement dans la chambre de mélange (1) sont mélangés sous atmosphère pressurisée,
un chemin conique (3) qui communique avec la chambre de mélange (1) en aval de la chambre de mélange (1) et comporte une surface périphérique interne là où une surface de coupe transversale du chemin conique (3) diminue vers l'aval du chemin conique (3),
un piston conique (2) qui est inséré dans le chemin conique (3) et comporte une surface périphérique externe dont la forme correspond à la surface périphérique interne du chemin conique (3),
un actionneur pour le piston conique (2) qui rétracte le piston conique (2) d'une position où la surface périphérique interne et la surface périphérique externe sont en contact direct l'une avec l'autre afin de former un interstice entre la surface périphérique interne et la surface périphérique externe, une surface de coupe transversale de l'interstice diminuant vers l'aval du chemin conique (3),
un orifice de déversement (4) pour déverser le mélange à la fin,
l'actionneur pour le piston conique (2) contrôlant dans quelle mesure le piston conique (2) se rétracte afin de faire varier la largeur de l'interstice et ajustant ainsi l'atmosphère pressurisée maintenue par la chambre de mélange (1) et le degré de réduction de la pression du mélange dans le chemin conique (3), **caractérisé en ce que** le dispositif comprend en outre,
un chemin tampon (5) qui communique avec le chemin conique (3) en aval du chemin conique (3), le chemin tampon (5) étant configuré de manière à ce que le chemin tampon (5) reçoive le mélange distribué au chemin tampon (5) par le chemin conique (3) à travers l'interstice, le mélange étant en expansion et le mélange ayant passé à travers le chemin tampon (5) soit distribué à un côté de l'orifice de déversement (4) à travers une ouverture, de sorte que le degré d'expansion du mélange est réduit par rapport au cas dans lequel le mélange est distribué directement du chemin conique (3) à l'orifice de déversement (4).

2. Dispositif mélangeur déverseur selon la revendication 1, la surface périphérique interne et la surface périphérique externe étant des surfaces coniques.

3. Dispositif mélangeur déverseur selon la revendication 1, le chemin tampon (5) ayant une plus grande surface de coupe transversale d'une voie de passage pour le mélange que celle de l'interstice dans une section communicante du chemin tampon (5) dans laquelle l'interstice et le chemin tampon (5) communiquent l'un avec l'autre et
la surface de coupe transversale de la voie de passage pour le mélange à une extrémité du chemin tampon (5) étant plus petite que celle de la voie de passage dans la section communicante et l'extrémité jouant le rôle de l'ouverture.

4. Dispositif mélangeur déverseur selon la revendication 1 comprenant en outre :
un piston auxiliaire (11) qui fait varier une surface d'un orifice de distribution (6) du chemin tampon (5) pour distribuer le mélange sur le côté de l'orifice de déversement (4), et
un actionneur du piston auxiliaire (11) qui imprime un mouvement alternatif au piston auxiliaire (11).

5. Dispositif mélangeur déverseur selon la revendication 4, comprenant en outre :
un chemin tampon auxiliaire (12) entre le chemin tampon (4) et l'orifice de déversement (4), à travers lequel passe le mélange distribué par le chemin tampon (5),
l'orifice de distribution (6) du chemin tampon (5) étant ouvert au niveau d'une surface périphérique interne du chemin tampon auxiliaire (12),
le chemin tampon auxiliaire ayant une coupe transversale constante dans une section s'étendant en aval de l'orifice de distribution (6) et s'étendant en ligne droite dans la section,
la surface de coupe transversale de la voie de passage du méla nge dans la section s'étendant en aval de l'orifice de distribution (6) du chemin tampon auxiliaire (12) étant plus grande que la surface de l'orifice de distribution (6),
le piston auxiliaire (11) étant inséré dans le chemin tampon auxiliaire (12) et
un actionneur du piston auxiliaire (11) imprimant un mouvement alternatif au piston auxiliaire (11) à l'intérieur du chemin tampon auxiliaire (12) afin de faire varier la surface ouverte de l'orifice de distribution (6) au niveau de la surface périphérique interne du chemin tampon auxiliaire (12).

6. Dispositif mélangeur déverseur selon la revendication 5, une ouverture située à une extrémité du chemin tampon auxiliaire (12) étant l'orifice de déversement (4) et
le piston auxiliaire (11) exécutant un mouvement alternatif à partir d'une position dans laquelle l'orifice de distribution (6) est complètement exposé au chemin tampon auxiliaire (12) vers l'orifice de déversement (4) et au-delà.

7. Dispositif mélangeur déverseur selon la revendication 4, comprenant en outre des mécanismes de positionnement pour définir des positions vers lesquelles le piston conique (2) et le piston auxiliaire (11) sont rétractés.

8. Dispositif mélangeur déverseur selon la revendication 4, l'actionneur du piston conique (2) et l'actionneur du piston auxiliaire (11) impriment un mouvement alternatif respectivement au piston conique (2) et au piston auxiliaire (11) à partir d'une pression sous laquelle au moins l'un des liquides est distribué vers la chambre de mélange (1) et ainsi font varier la surface de coupe transversale de l'interstice et la surface de l'orifice de distribution (6).

9. Dispositif mélangeur déverseur selon la revendication 1, comprenant en outre un mécanisme d'approvisionnement d'un agent gonflant qui apporte une quantité requise d'agent gonflant à un liquide contenant une matière première afin de former le liquide contenant la matière première and l'agent gonflant.

10. Dispositif mélangeur déverseur selon la revendication 5, une partie de corps comprenant la chambre de mélange (1), le chemin conique (3), le chemin tampon (5) et le chemin tampon auxiliaire (12) ayant une configuration pouvant être divisée en un bloc comprenant la chambre de mélange (1), le chemin conique (3) et le chemin tampon (5) et un bloc comprenant le chemin tampon auxiliaire (12).
